# EUROPÄISCHE PATENTSCHRIFT

(11) **EP 1 065 493 B1**
(45) Veröffentlichungstag und Bekanntmachung des Hinweises auf die Patenterteilung: **29.10.2008**
(21) Anmeldenummer: 00109835.9
(22) Anmeldetag: 10.05.2000
(51) Int. Cl.: G01N 3/32

(54) **Verfahren zur Rissfortschrittssimulation**
Method for simulating the propagation of cracks
Method pour simuler de la propagation des fissures

(30) Priorität: 20.06.1999 DE 19927941
(43) Veröffentlichungstag der Anmeldung: 03.01.2001
(73) Patentinhaber: MTU Aero Engines GmbH, 80995 München (DE)
(72) Erfinder: Dhondt, Guido, Dr., 82194 Gröbenzell (DE)

(56) Entgegenhaltungen:
- US-A- 5 731 817
- KRYSL, P., BELYTSCHKO, T.: "The Element Free Garlekin Method for Dynamic Propagation of Arbitrary 3-D Cracks" INTERNATIONAL JOURNAL FOR NUMERICAL METHODS IN ENGINEERING, Bd. 44, Nr. 6, 28. Februar 1999 (1999-02-28), Seiten 767-800, XP000942717
- LEWICKI, D.G., BALLARINI, R.: "Effect of Rim Thickness on Gear Crack Propagation Path " TRANSACTIONS OF THE ASME, Bd. 119, Nr. 1, 1997, Seiten 88-95, XP000942713
- DHONDT G: "CUTTING OF A 3-D FINITE ELEMENT MESH FOR AUTOMATIC MODE I CRACK PROPAGATION CALCULATIONS" INTERNATIONAL JOURNAL OF NUMERICAL METHODS IN ENGINEERING,GB,CHICHESTER, Bd. 42, Nr. 4, 30. Juni 1998 (1998-06-30), Seiten 749-772, XP000866390 ISSN: 0029-5981
- DE ARAUJO, T. D. P.; CALVACANTE NETO, J. B.; DE CARVALHO, M. T. M.; BITTENCOURT, T. N.; MARTHA, L. F. : "Adaptive Simulation of Fracture Processes Based on Spatial Enumeration Techniques" INTERNATIONAL JOURNAL OF ROCK MECHANICS AND MINING SCIENCES, Bd. 34, Nr. 3/4, 1997, Seite 551 XP000942719
- DHONDT G: "AUTOMATIC 3-D MODE I CRACK PROPAGATION CALCULATIONS WITH FINITE ELEMENTS" INTERNATIONAL JOURNAL OF NUMERICAL METHODS IN ENGINEERING,GB,CHICHESTER, Bd. 41, Nr. 4, 28. Februar 1998 (1998-02-28), Seiten 739-757, XP000866379 ISSN: 0029-5981

## Beschreibung

Die Erfindung betrifft das Gebiet der Simulation und Berechnung der Rissausbreitung in vorgegebenen Strukturen. Insbesondere eignet sich das erfindungsgemäße Verfahren zur Rissfortschrittssimulation bei zyklischer Belastung einer Struktur. Die Erfindung ist für alle computergestützten Entwurfsvorgänge einsetzbar. Besonders eignet sich die Erfindung für den Entwurf von hoch belasteten und/oder sicherheitskritischen Bauteilen, beispielsweise im Flugzeug- oder Triebwerksbau. Zyklische Belastungen treten hier insbesondere bei Start- und Landevorgängen auf.

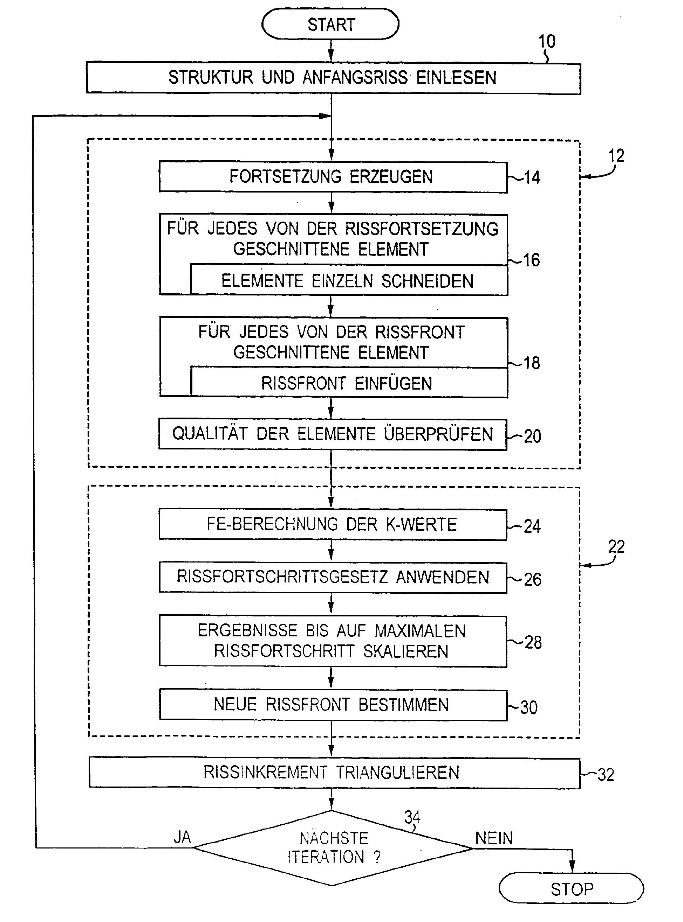

Das Dokument KRYSL, P., BELYTSCHKO, T.: "The Element Free Galerkin Method for Dynamic Propagation of Arbitrary 3-D Cracks" INTERNATIONAL JOURNAL FOR NUMERICAL METHODS IN ENGINEERING, Bd. 44, Nr. 6, 28. Februar 1999 (1999-02-28), Seiten 767-800, XP000942717 betrifft ein Verfahren zur Rissfortschrittssimulation nach der sogenannten element-freien Galerkin Methode (Element-Free Galerkin (EFG) method), bei welcher der Rissbereich frei von finiten Elementen gehalten wird und stattdessen ein sogenanntes EFG Superelement mit einem Muster von EFG Knoten verwendet wird. Siehe hierzu insbesondere die Figuren 2 und 3 des Dokuments. Die Risskonfiguration wird durch Triangulation erfasst.

Das Dokument LEWICKI, D.G., BALLARINI, R.: "Effect of Rim Thickness on Gear Crack Propagation Path" TRANSACTIONS OF THE ASME, Bd. 119, Nr. 1, 1997, Seiten 88-95, XP000942713 befasst sich konkret mit der Rissfortschrittssimulation an Zahnradverzahnungen in Abhängigkeit von der radialen Dicke des die Verzahnung tragende Radkörperrandes (gear rim). Es kommt eine Finite-Elemente-Methode zur Anwendung, wobei die Elemente um die Rissspitze herum dreieckig (triangular) ausgeführt sind. Siehe Figur 2 des Dokuments. Die Risse werden als zweidimensionale Kurven erfasst ohne Berücksichtigung ihres Verlaufs in der axialen Tiefe. Siehe insbesondere die Figuren 10 bis 13.

Aus dem Artikel "Cutting of a 3-D finite element mesh for automatic mode I crack propagation calculations" von Guido Dhondt, erschienen in International Journal for Numerical Methods in Engineering, Band 42 (1998), Seiten 749-772, ist ein Verfahren zur Rissfortschrittssimulation bekannt. Bei diesem Verfahren wird angenommen, dass sich der Riss in einer Ebene ausbreitet. Diese Annahme ist zwar für viele Anwendungsbereiche sinnvoll, aber sie schränkt doch generell die Genauigkeit der Simulation ein.

Das Dokument DE ARAUJO, T.D.P.; CALVANCANTE NETO, J.B.; DE CARVALHO, M.T.M.; BITTENCOURT, T.N.; MARTHA, L.F.: "Adaptive Simulation of Fracture Processes Based on Spatial Enumeration Techniques" INTERNATIONAL JOURNAL OF ROCK MECHANICS AND MINING SCIENCES, Bd. 34, Nr. 3/4 1997, Seite 551, XP 00942719 betrifft eine zweidimensionale Rissfortschrittssimulation nach einer Finite-Elemente-Methode, bei der die finiten Elemente automatisch an den fortschreitenden Riss angepasst werden.

Die Erfindung hat demgemäß die Aufgabe, ein Verfahren zur Rissfortschrittssimulation bereitzustellen, das in vielen Anwendungsbereichen einsetzbar ist und mit möglichst hoher Genauigkeit arbeitet. Vorzugsweise soll das Verfahren nicht zu viel Rechenzeit benötigen, so dass sich Simulationen über viele Belastungszyklen mit realistischem Aufwand durchführen lassen.

Erfindungsgemäß wird diese Aufgabe durch ein Verfahren mit den Merkmalen des Anspruchs 1 gelöst. Die abhängigen Ansprüche betreffen bevorzugte Ausgestaltungen der Erfindung.

Die Erfindung beruht auf der Grundidee, Rissformen zu berechnen, die nicht notwendigerweise in einer Ebene verlaufen, sondern vielmehr beliebig gekrümmten Flächenformen folgen. Die Rissform wird beim Verfahrensablauf als triangulierte Fläche erzeugt und fortgeschrieben. Durch die Erfindung lassen sich somit komplex geformte Risse mit hoher Genauigkeit berechnen. Dadurch werden rechnergestützte Entwurfsverfahren erheblich leistungsfähiger und vielseitiger. Der sonst erforderliche hohe Aufwand für praktische Versuche kann bei hoher Zuverlässigkeit der entworfenen Bauteile verringert werden. Erfindungsgemäß ist vorgesehen, den weitergeführten Riss, dessen neue Rissfront durch eine Finite-Elemente-Berechnung und Anwendung eines Rissfortschrittsgesetzes bestimmt worden ist, zu triangulieren. Dies schliesst die Alternativen ein, dass der gesamte bisher berechnete Riss neu trianguliert wird, oder dass die Triangulierung des bisherigen Risses beibehalten und nur ein im aktuellen Iterationsdurchlauf hinzugekommenes Rissinkrement neu trianguliert wird. In jedem Iterationsdurchlauf stellt der weitergeführte Riss das eigentliche Ergebnis dar. Die Rissfortsetzung, die am Anfang der Iteration erzeugt wird, dient dagegen nur internen Zwecken und beeinflusst das Ergebnis der Simulation nicht.oder möglichst wenig. Erfindungsgemäß wird zur Berechnung der geschnittenen Struktur zunächst eine Rissfortsetzung erzeugt. Dies erfolgt dadurch, dass zunächst die Außenkontur des Risses mit zusätzlichen Dreiecken zu einer konvexen Risskontur ergänzt wird, und dann weitere Dreiecke hinzugefügt werden, bis die Rissfortsetzung die gesamte Struktur durchdringt.

Bevorzugt kann in einem weiteren Schritt dann zumindest jedes von der Rissfortsetzung geschnittene Element der Struktur in mindestens zwei Teile aufgespalten werden, so dass die Rissfortsetzung stets entlang der Grenzflächen und nicht durch einzelne Teile hindurch verläuft Vorzugsweise wird in noch einem Schritt durch weiteres Aufspalten von Elementen der Struktur dafür gesorgt, daß die Rißfront entlang der Grenzen (Kanten) von Strukturelementen verläuft.

Um mit vertretbarem Rechenaufwand eine Rißfortschrittssimulation über möglichst viele Zyklen einer zyklischen Belastung zu erreichen, werden in bevorzugten Ausführungsformen während einer Iteration (d.h., auf Grundlage einer einzigen Finite-Elemente-Berechnung von Spannungswerten) mehrere Belastungszyklen simuliert. Es wird also der Rißfortschritt über beispielsweise 100 oder 200 Zyklen berechnet, und erst im Anschluß daran wird das gesamte in diesen Zyklen erhaltene Rißinkrement trianguliert und als Ausgangsriß für die nächste Iteration verwendet.

Vorzugsweise wird die Anzahl der simulierten Zyklen so bestimmt, daß der Rißfortschritt an zumindest einem Punkt entlang der Rißfront einen vorgegebenen Maximalwert (beispielsweise 50 µm) gerade erreicht oder gerade übersteigt. Diese Berechnung kann durch eine innere Schleife erreicht werden, in der der Rißfortschritt sukzessive aufsummiert wird, bis der Rißfortschritts-Maximalwert erreicht wird. In einer besonders einfachen Ausführungsform wird dagegen das Ergebnis einer einzigen Anwendung des Rißfortschrittsgesetzes so skaliert, daß der Maximalwert gerade die vorgegebene Grenze erreicht.

Ein Ausführungsbeispiel der Erfindung und mehrere Ausführungsalternativen werden nun anhand der schematischen Zeichnung genauer erläutert. Die (einzige) Figur stellt ein Flußdiagramm des Ausführungsbeispiels des erfindungsgemäßen Verfahrens dar.

Bei dem in der Figur dargestellten Verfahren erfolgt eine vollautomatische Berechnung und Simulation der Rißausbreitung bei zyklischer Belastung einer dreidimensionalen Struktur. Als Teil des Verfahrens wird die Finite-Elemente-Methode zur Berechnung von Spannungswerten an der Rißfront verwendet.

In einem vorbereitenden Verfahrensschritt 10 werden die ungerissene Struktur und der Anfangsriß eingelesen. Die Struktur wird in Form eines Volumennetzes dargestellt, das aus einer Vielzahl aneinander anschließender Volumenelemente (brick elements) gebildet ist. Als Elementtypen sind in Ausführungsalternativen quaderförmige, 8-knotige Elemente verwendbar. Im vorliegenden Ausführungsbeispiel werden jedoch 20-knotige Elemente benutzt, die aus den gerade genannten quaderförmigen Elementen hervorgehen, indem je ein zusätzlicher Stützknoten in jede Kante des Quaders eingefügt wird.

Der Anfangsriß wird in Schritt 10 als triangulierte, nicht notwendigerweise ebene Struktur eingelesen. Für den Sonderfall eines ebenen Anfangsrisses kann dieser in Form einer einfachen geometrischen Parametrisierung angegeben und automatisch trianguliert werden. Als solche Parametrisierungen ebener Risse können beispielsweise bei einem Geraderiß zwei Punkte auf der Rißlinie und ein Punkt auf der Rißfläche angegeben werden. Auf ähnliche Weise können zum Beispiel teilkreisförmige Anfangsrisse oder Anfangsrisse, deren Rißfront durch eine stückweise quadratische Funktion vorgegeben sind, durch Angabe einiger weniger Punkte spezifiziert werden. Die Vorgabe des Anfangsrisses beruht auf Erfahrungswerten des Benutzers, die sich zum Beispiel aus typischen Beobachtungen bei Belastungsversuchen ergeben.

Sind die Anfangswerte eingegeben, folgt die eigentliche Rißfortschrittsberechnung. Diese Berechnung läuft in Iterationen ab, bei denen wiederholt abwechselnd ein neuer Schnitt durch die Struktur berechnet, eine neue Rißfront bestimmt und der weitergeführte Riß trianguliert wird. Das Bestimmen der neuen Rißfront schließt den Aufruf eines generischen Finite-Elemente-Programms ein, wie unten noch genauer beschrieben werden wird.

In dem ersten Funktionsblock 12 der Iteration wird die Struktur mit dem fortgesetzten Riß geschnitten. Zunächst muß dazu eine Fortsetzung des bisherigen Risses bestimmt werden (Schritt 14). Diese Fortsetzung enthält den Riß. Sie ist so weit ausgedehnt, daß sie zumindest die kleinste die ganze Struktur umschließende Kugelfläche erreicht. Dadurch wird sichergestellt, daß die Rißfortsetzung nicht etwa innerhalb der Struktur endet, sondern daß sie die gesamte Struktur vollständig schneidet. Dies ist für die folgenden Verfahrensschritte, insbesondere für die verwendeten Schnittverfahren, erforderlich.

Die genaue Gestalt der in Schritt 14 bestimmten Rißfortsetzung hat nur geringe Bedeutung, da die Richtung (und der Betrag) der Rißentwicklung in den folgenden Verfahrensschritten auf Grundlage der Finite-Elemente-Berechnung weitgehend unabhängig von der Rißfortsetzung ist. Daher sind unterschiedliche Strategien zur Rißfortsetzung in Schritt 14 möglich. Im hier beschriebenen Ausführungsbeispiel dient als Rißfortsetzung eines ebenen Risses einfach die Rißebene. Ist der Riß nicht eben, so ist die Rißfortsetzung eine Fortsetzung der Triangulierung des Risses. Um diese Fortsetzung zu bilden, werden zunächst eventuelle konkave Teile der Außenkontur des Risses mit Dreiecken komplementiert, bis die gesamte Kontur konvex ist. Anschließend werden entlang der lokalen Tangenten zusätzliche Dreiecke generiert, bis die oben beschriebene Ausdehnung der Rißfortsetzung erreicht ist.

In einem nächsten Schritt 16 wird die erzeugte Rißfortsetzung (einschließlich des darin enthaltenen Risses) in die (ungerissene) Struktur eingefügt. Dies geschieht dadurch, daß alle von der Rißfortsetzung geschnittenen Elemente der Struktur so geteilt werden, daß die Rißfortsetzung nicht durch die geschnittenen Elemente, sondern entlang deren Grenzflächen verläuft. Die Art der Unterteilung ist für einen Satz typischer Basistopologien vordefiniert. Alle anderen möglichen Konstellationen werden vorab durch geeignete Teilungen in eine dieser Basistopologien zurückgeführt, wie dies unten noch genauer beschrieben wird.

Im hier beschriebenen Ausführungsbeispiel läuft Schritt 16 in drei Teilschritten ab. Zunächst erfolgen optimierende Modifikationen des die Struktur definierenden Netzes. Der Grund für diesen ersten Teilschritt ist, daß die später eingesetzten Finite-Elemente-Verfahren um so genauer sind, je würfelähnlicher die einzelnen Volumenelemente sind. Sehr lange und schmale Elemente können das Berechnungsergebnis verfälschen. Daher werden im vorliegenden Ausführungsbeispiel einzelne Punkte der Netzstruktur verschoben, um solche ungünstige Elementformen als Ergebnis der nachfolgenden Schnitte zu vermeiden. Insbesondere betrifft dies Punkte, die nahe bei der Rißfortsetzung liegen, weil hier nach dem Schnitt durch die Rißfortsetzung oft schmale, ungünstig geformte Volumenelemente entstehen. In Ausführungsalternativen kann dieser Optimierungsschritt auf andere Art durchgeführt werden oder ganz entfallen.

Der zweite Teilschritt von Schritt 16 wird nur für solche Volumenelemente ausgeführt, die von der Rißfortsetzung geschnitten werden, ohne daß unmittelbar eine Basistopologie vorliegt. Die im hier beschriebenen Beispiel definierten Basistopologien sind alle dadurch gekennzeichnet, daß nach dem Schnitt aus einem Volumenelement maximal zwei Stücke entstehen, und daß jede Kante des Volumenelements höchstens einmal von der Rißfortsetzung geschnitten wird. Insbesondere bei gekrümmten Rißfortsetzungen sind diese Bedingungen aber nicht notwendigerweise erfüllt. So kann beispielsweise eine U-förmige Rißfortsetzung ein einziges Volumenelement in drei Teile schneiden oder eine Kante des Volumenelements zweimal durchdringen.

In allen genannten Fällen ist es möglich, durch einfaches Teilen des betroffenen Volumenelements zwei oder mehr Volumenelemente zu erhalten, die alle die genannten Bedingungen erfüllen, d.h. je einer Basistopologie entsprechen. Solche Schnitte werden im zweiten Teilschritt von Schritt 16 für jedes betroffene Volumenelement ausgeführt. Als Ergebnis erhält man eine gegebenenfalls feinmaschigere Netzstruktur, in der bei den von der Rißfortsetzung geschnittenen Volumenelementen nur noch Basistopologien auftreten.

Bei den im hier beschriebenen Ausführungsbeispiel verwendeten 20-knotigen Volumenelementen lassen sich insgesamt sieben Basistopologien unterscheiden. Für jede dieser Basistopologien sind Teilungsregeln vordefiniert, die sicherstellen, daß die erhaltenen Teile wiederum 20-knotige Volumenelemente sind. Überdies sollen die in Form von Mustervernetzungen definierten Teilungsregeln ihrerseits Volumenelemente produzieren, die möglichst gut geeignet für die später erfolgende Finite-Elemente-Berechnung sind. Beispiele für solche Teilungsregeln im Kontext ebener Risse sind in dem eingangs bereits erwähnten Artikel des Erfinders enthalten, dessen Inhalt hiermit in die vorliegende Anmeldung aufgenommen wird.

Im dritten Teilschritt von Schritt 16 werden nun die genannten Teilungsregeln auf jedes von der Rißfortsetzung geschnittene Volumenelement angewandt. Das Volumenelement wird entsprechend dieser Teilungsregeln geschnitten, wobei zwei oder mehr (typischerweise sechs bis zehn) neue Volumenelemente in 20-knotiger Form entstehen. Die Rißfortsetzung schneidet keines der neuen Volumenelemente, sondern verläuft stets entlang der Grenzen zwischen Volumenelementen. Mit diesem Teilschritt ist Schritt 16, also das Einfügen der Rißfläche in die Struktur, beendet.

Im darauffolgenden Verfahrensschritt 18 wird die Rißfront in die Struktur eingefügt. Das Ziel dieses Schrittes ist eine weitere Unterteilung der Volumenelemente, die zum Ziel hat, daß die Rißfront entlang einer Kante von Volumenelementen (und nicht quer über eine Fläche) verläuft. Ähnlich wie im bereits beschriebenen dritten Teilschritt von Schritt 16 werden in Schritt 18 die von der Rißfront geschnittenen Elemente bestimmt und neu vernetzt.

Als Grundlage von Schritt 18 dienen zwei Basistopologien, die beide sowohl "normale" 20-knotige Volumenelemente als auch sogenannte kollabierte Viertelpunktelemente erzeugen. Kollabierte Viertelpunktelemente sind eine Sonderform der 20-knotigen Volumenelemente, bei denen drei Knoten an einer Spitze (bei der Rißfront) zusammenfallen und die Stützpunkte an den Kanten zur Spitze hin verschoben sind. Die kollabierten Viertelpunktelemente dienen dazu, die linear-elastische Spannungs- und Dehnungssingularität bei der Rißfront möglichst exakt zu modellieren. Die Basistopologien sehen außerdem eine feine Untergliederung der erzeugten Netze in der Umgebung der Rißfront vor. Die Anzahl der Schichten und damit die Feinheit der Modellierung können vom Anwender eingestellt werden. Dies erlaubt eine Kontrolle der Rechengenauigkeit und der benötigten Rechenzeit. Je nach dem Wert dieser Einstellung können in Schritt 18 aus einem einzigen Volumenelement beispielsweise sechs bis 30 Volumenelemente erzeugt werden.

Nachdem die Rißfront in Schritt 18 eingefügt worden ist, wird die erhaltene Netzstruktur in Schritt 20 nochmals einer Kontrolle unterzogen, um sicherzustellen, daß die Elemente für die Finite-Elemente-Berechnung akzeptabel sind. Dabei wird die Jacobi-Determinante der Elemente berechnet.

Nun folgt ein zweiter Funktionsblock 22 der Iteration, in dem die neue Rißfront bei der simulierten zyklischen Belastung bestimmt wird. In einem ersten Schritt 24 des Funktionsblocks 22 werden Spannungswerte an der bisherigen Rißfront ("Rißspitze") mittels eines generischen Finite-Elemente-Programms berechnet. Solche Programme sind an sich bekannt und brauchen daher hier nicht im einzelnen beschrieben zu werden. Geeignet ist beispielsweise das unter dem Handelsnamen "Abaqus" erhältliche Programm.

Das Ziel der Finite-Elemente-Berechnung in Schritt 24 ist es, die Spannungsfelder an der Rißfront zu bestimmen und aus den asymptotischen Spannungsfeldern an der Rißfront die Spannungsintensitätsfaktoren (K-Werte) abzuleiten. Die K-Werte sind Maße für die Geschwindigkeit der Rißausbreitung, wobei drei Modes (Entsprechend den Werten K_{I}, K_{II} und K_{III}) betrachtet werden. Insgesamt werden in Schritt 24 für jeden Knoten der Volumenelemente an der Rißfront die drei genannten K-Werte berechnet. Dieser Berechnungsschritt ist an sich bekannt.

Im darauffolgenden Schritt 26 wird ein vorgegebenes Rißfortschrittsgesetz herangezogen, um aus den K-Werten für jeden Knoten der Rißfront die Größe und vor allem auch die Richtung der Rißausbreitung zu berechnen. Es soll in diesem Zusammenhang nochmals betont werden, daß die hier ermittelte Richtung im wesentlichen unabhängig von der eher zufälligen Richtung der Rißfortsetzung in Schritt 14 ist.

Das Rißfortschrittsgesetz ist materialabhängig und wird vom Benutzer vorgegeben. Bei dem hier beschriebenen Ausführungsbeispiel wird ein homogener Werkstoff vorausgesetzt. Beschichtungen, die in der Regel spröde sind, werden nicht berücksichtigt. Eine Anisotropie des Werkstoffs kann jedoch durch ein geeignetes Rißfortschrittsgesetz ausgedrückt werden. Unterschiedliche Rißfortschrittsgesetze und deren grundsätzliche Anwendung zur Rißfortschrittssimulation sind gut bekannt, so daß hier auf das Wissen des einschlägigen Fachmanns und die grundlegende Fachliteratur verwiesen werden kann.

Wie bereits erwähnt, ergibt sich aus der Anwendung des Rißfortschrittsgesetzes der Betrag und die Richtung der Rißausdehnung für einen Belastungszyklus. Um den Berechnungsaufwand in vertretbaren Grenzen zu halten, ist im hier beschriebenen Ausführungsbeispiel vorgesehen, in Schritt 28 die Ergebnisse von Schritt 26 so zu skalieren, daß ein vorgegebener Maximalwert für den Rißfortschritt gerade erreicht wird. Dazu wird zunächst der maximale Rißfortschritt entlang der Rißfront für einen Belastungszyklus bestimmt. Eine Division des vorgegebenen Maximalwerts (z.B. 50 µm) durch den gerade berechneten maximalen Rißfortschrittswert ergibt die Anzahl von Belastungszyklen, die in der gegenwärtigen Iteration simuliert werden können. Diese Anzahl ist gleichzeitig der Multiplikationsfaktor zur Skalierung der Ergebnisse in Schritt 28. Bei dem hier beschriebenen Ausführungsbeispiel wird bei typischen Berechnungen in vielen Iterationen eine Skalierung um einen Faktor zwischen 100 bis 200 erreicht.

In Ausführungsalternativen ist vorgesehen, statt der Skalierung in Schritt 28 die Anwendung des Rißfortschrittsgesetzes (Schritt 26) mit den bereits in Schritt 24 bestimmten K-Werten mehrmals zu wiederholen. Der Rißfortschritt in allen diesen Berechnungszyklen wird in Form eines Rißinkrements aufsummiert, bis der maximale Rißfortschritt entlang der Rißfront den vorgegebenen Maximalwert erreicht.

In beiden beschriebenen Ausführungsformen wird der Grenzwert so gewählt, daß einerseits ein möglichst hoher Rißfortschritt in einer einzigen Iteration simulierbar ist, andererseits aber die Genauigkeit des Verfahrens nicht leidet. Ein Grenzwert zwischen 500 µm und 5 µm, beispielsweise 50 µm, kann für viele Anwendungen einen vernünftigen Kompromiß darstellen. Bei größerem simulierten Rißwachstum in einer einzigen Iteration besteht das Risiko von Ungenauigkeiten, weil sich wegen der räumlichen Verschiebung der Rißfront auch die Spannungswerte signifikant geändert haben könnten.

Nachdem in Schritt 28 das Rißinkrement iterativ oder durch eine Skalierung berechnet wurde, wird in Schritt 30 auf Grundlage des bisherigen Risses und des Rißinkrements die neue Rißfront bestimmt. Diese neue Rißfront wird auch als weitergeführter Riß bezeichnet.

In einem die Iteration abschließenden Schritt 32 wird der weitergeführte Riß, der im Regelfall nicht eben ist, trianguliert. Während im hier beschriebenen Ausführungsbeispiel vorgesehen ist, die Triangulierung des ursprünglichen Risses zu übernehmen und nur eine neue Triangulierung des Rißinkrements hinzuzufügen, wird in Ausführungsalternativen eine vollständig neue Triangulierung des weitergeführten Risses erstellt.

Die Iteration kann nun von neuem bei Schritt 14 starten (Test 34). Der weitergeführte Riß wird im nächsten Iterationszyklus als Ausgangsriß verwendet. Ist ein vorgegebenes Abbruchkriterium erfüllt (z.B. abhängig vom Maß des Rißfortschritts oder der Anzahl der Iterationen oder einer Benutzeraktion), endet das Verfahren.

Bei Versuchen sind mit dem erfindungsgemäßen Verfahren Vorhersagen über die Lebensdauer von Werkstücken bei zyklischer Belastung erzielt worden, die eine überraschende Übereinstimmung mit experimentellen Ergebnissen aufwiesen.

## Patentansprüche

1. Verfahren zur Rissfortschrittssimulation unter einer zyklischen Belastung, mit den Schritten:
a) Bereitstellen (10) einer Definition einer dreidimensionalen Struktur und eines flächigen, ebenen oder dreidimensionalen Anfangsrisses,
b) Berechnen (12) eines Schnitts durch die Struktur entlang einer Rissfortsetzung, wobei im Falle eines nicht ebenen Risses beim Erzeugen (14) der Rissfortsetzung zunächst eine äußere, von der Rissfläche zur Struktur hin konvexe Risskontur erzeugt wird und dann an den Rändern der Risskontur zusätzliche Dreiecke erzeugt werden, bis eine die Struktur vollständig schneidende Triangulierung vorliegt,
c) Bestimmen (22) einer neuen Rissfront, indem Spannungwerte unter einer zyklischen Belastungdurch eine Finite-Elemente-Berechnung bestimmt werden und ein Rissfortschrittsgesetz angewendet wird,
d) Triangulieren (32) des weitergeführten Risses, und
e) Wiederholen (34) der Schritte b) bis e), bis eine vorbestimmte Endbedingung erfüllt ist.

2. Verfahren nach Anspruch 1,
**dadurch gekennzeichnet, dass** der Anfangsriss in Schritt a) als triangulierter, nicht notwendigerweise ebener Riss bereitgestellt wird.

3. Verfahren nach Anspruch 1 oder 2,
**dadurch gekennzeichnet, dass** in Schritt b) zunächst die Rissfortsetzung erzeugt wird (14) und dann zumindest jedes von der Rissfortsetzung geschnittene Element der Struktur in mindestens zwei Teile aufgespalten wird (16), an deren Grenze die Rissfortsetzung verläuft.

4. Verfahren nach Anspruch 3,
**dadurch gekennzeichnet; dass** in Schritt b) ferner zumindest jedes von der Rissfront geschnittene Element der Struktur in mindestens zwei Teile aufgespalten wird (18), an deren Grenzlinien die Rissfront verläuft.

5. Verfahren nach einem der Ansprüche 1 bis 4,
**dadurch gekennzeichnet, dass** in Schritt c) die Ergebnisse einer Anwendung des Rissfortschrittsgesetzes auf die berechneten Spannungswerte skaliert werden (28), bis eine vorbestimmte Bedingung erreicht ist.

6. Verfahren nach einem der Ansprüche 1 bis 4,
**dadurch gekennzeichnet, dass** in Schritt c) das Rissfortschrittsgesetz auf Grundlage der einmal berechneten Spannungswerte wiederholt angewandt wird, bis eine vorbestimmte Bedingung erreicht ist.

7. Verfahren nach Anspruch 5 oder Anspruch 6,
**dadurch gekennzeichnet, dass** die vorbestimmte Bedingung das Erreichen eines Rissfortschritts-Maximalwertes ist.

8. Verfahren nach einem der Ansprüche 1 bis 7,
**dadurch gekennzeichnet, dass** in Schritt d) die Triangulierung des bisherigen Risses beibehalten und nur das Rissinkrement neu trianguliert wird (32).

## Claims

1. Method for the simulation of crack propagation under cyclical loading, comprising the following steps:
a) Provision (10) of a definition of a three-dimensional structure and a laminar, planar or three-dimensional initial crack,
b) Calculation (12) of a section through the structure along a crack propagation, wherein, in the case of a non-planar crack, an external crack contour which is convex from the crack surface towards the structure is first generated in the process of generating (14) the crack propagation and additional triangles are then generated at the edges of the crack contour until a triangulation which completely intersects the structure is achieved,
c) Determination (22) of a new crack front by determining stress values under cyclical loading by means of a finite elements calculation and using a crack propagation law,
d) Triangulation (32) of the propagated crack, and
e) Repetition (24) of steps b) to e) until a preset end condition is met.

2. Method according to claim 1,
**characterised in that** the initial crack is provided as a triangulated, not necessarily planar, crack in step a).

3. Method according to claim 1 or 2,
**characterised in that** in step b) the crack propagation is first generated (14) and at least each element of the structure intersected by the crack propagation is then split into at least two parts (16), at the boundary of which the crack propagation extends.

4. Method according to claim 3,
**characterised in that** in step b) further at least each element of the structure intersected by the crack front is split into at least two parts (18), at the boundary lines of which the crack front is located.

5. Method according to any of claims 1 to 4,
**characterised in that** in step c) the results of an application of the crack propagation law are scaled to the calculated stress values (28) until a preset condition is met.

6. Method according to any of claims 1 to 4,
**characterised in that** in step c) the crack propagation law is repeatedly applied on the basis of the once calculated stress values until a preset condition is met.

7. Method according to claim 5 or 6,
**characterised in that** the preset condition is the reaching of a maximum value for crack propagation.

8. Method according to any of claims 1 to 7,
**characterised in that** in step d) the triangulation of the existing crack is maintained and only the crack increment is triangulated anew (32).

## Revendications

1. Procédé pour simuler la propagation de fissures sous une charge cyclique, comportant les étapes suivantes :
a) mise à disposition (10) d'une définition d'une structure tridimensionnelle et d'une fissure de départ mince, plane ou tridimensionnelle,
b) calcul (12) d'une coupe de la structure le long d'une propagation de fissures, dans le cas d'une fissure non plane lors de la génération (14) de la propagation de fissures étant généré tout d'abord un contour de fissure extérieur, convexe de la surface de fissure vers la structure puis des triangles supplémentaires étant générés sur les bords du contour de fissure jusqu'à ce qu'une triangulation coupant complètement la structure se présente,
c) détermination (22) d'un nouveau front de fissure, en déterminant des valeurs de tension sous une charge cyclique par un calcul d'éléments finis et en appliquant une loi de propagation de fissures,
d) triangulation (32) de la fissure prolongée, et
e) répétition (34) des étapes b) à e) jusqu'à ce qu'une condition finale prédéterminée soit remplie.

2. Procédé selon la revendication 1, **caractérisé en ce que** la fissure de départ est mise à disposition à l'étape a) comme une fissure triangulée, pas nécessairement plane.

3. Procédé selon la revendication 1 ou 2, **caractérisé en ce qu'**à l'étape b), la propagation de fissures est tout d'abord générée (14) et au moins chaque élément de la structure coupé par la propagation de fissures est ensuite séparé (16) en au moins deux parties, sur le bord desquelles s'étend la propagation de fissures.

4. Procédé selon la revendication 3, **caractérisé en ce qu'**à l'étape b), au moins chaque élément de la structure coupé par le front de fissure est de plus séparé (18) en au moins deux parties, sur les lignes de séparation desquelles s'étend le front de fissure.

5. Procédé selon l'une quelconque des revendications 1 à 4, **caractérisé en ce qu'**à l'étape c), les résultats d'une application de la loi de propagation de fissures sont modulés (28) sur les valeurs de tension calculées jusqu'à ce qu'une condition prédéterminée soit atteinte.

6. Procédé selon l'une quelconque des revendications 1 à 4, **caractérisé en ce qu'**à l'étape c), la loi de propagation de fissures est appliquée à plusieurs reprises sur base des valeurs de tension calculées une fois jusqu'à ce qu'une condition prédéterminée soit atteinte.

7. Procédé selon la revendication 5 ou 6, **caractérisé en ce que** la condition prédéterminée est l'atteinte d'une valeur maximale de propagation de fissures.

8. Procédé selon l'une quelconque des revendications 1 à 7, **caractérisé en ce qu'**à l'étape d), la triangulation de la fissure obtenue jusqu'à présent est conservée et seul l'incrément de fissure est de nouveau triangulé (32).
